# EUROPÄISCHE PATENTSCHRIFT

(11) **EP 3 392 679 B1**
(45) Veröffentlichungstag und Bekanntmachung des Hinweises auf die Patenterteilung: **08.05.2024**
(21) Anmeldenummer: 17166970.8
(22) Anmeldetag: 19.04.2017
(51) Int. Cl.: G01V 8/26, G01S 7/481, G01S 17/42

(54) **OPTISCHER SENSOR**
OPTICAL SENSOR
CAPTEUR OPTIQUE

(43) Veröffentlichungstag der Anmeldung: 24.10.2018
(73) Patentinhaber: Leuze electronic GmbH + Co. KG, 73277 Owen/Teck (DE)
(72) Erfinder: WENDEL, Simon, 73230 Kirchheim/Teck (DE); RUPP, Jürgen, 73252 Lenningen (DE)
(74) Vertreter: Ruckh, Rainer Gerhard

(56) Entgegenhaltungen:
- EP-A1- 2 237 065
- EP-B1- 2 237 065
- EP-B1- 3 367 135
- DE-A1- 19 709 906
- DE-C1- 19 732 776

## Beschreibung

Die Erfindung betrifft einen optischen Sensor gemäß dem Oberbegriff des Anspruchs 1.

Derartige optische Sensoren bilden scannende Sensoren, insbesondere scannende Distanzsensoren, mittels derer ein flächiger Überwachungsbereich hinsichtlich eines Eindringens eines Objekts überwacht werden kann.

Die so ausgebildeten optischen Sensoren werden insbesondere im Bereich der Sicherheitstechnik eingesetzt, um Gefahrenbereiche an stationären Anlagen oder im Vorfeld von Fahrzeugen, insbesondere fahrerlosen Transportfahrzeugen, zu überwachen.

Um die Anforderungen im Bereich der Sicherheitstechnik zu erfüllen, muss der optische Sensor einen entsprechend fehlersicheren Aufbau aufweisen.

Ein generelles Problem bei derartigen optischen Sensoren, nicht nur im Bereich der Sicherheitstechnik, besteht darin, dass dessen Funktionsfähigkeit durch externe Umgebungseinflüsse beeinträchtigt werden kann, sodass keine sichere Objektdetektion mehr möglich ist.

Dies gilt insbesondere für die Scheibe des Gehäuses des optischen Sensors, durch welche die Lichtstrahlen der Sende-/ Empfangseinheit geführt sind, um Objekte im Überwachungsbereich detektieren zu können. Durch Verschmutzungen, Feuchtigkeit oder auch mechanische Beeinträchtigungen wie Risse oder Kratzer in der Scheibe kann die Durchlässigkeit der Scheibe reduziert sein, was zur Folge hat, dass die Lichtstrahlen der Sende-/ Empfangseinheit nicht mehr ungehindert durch die Scheibe geführt werden.

Um derartige Beeinträchtigungen erfassen zu können, ist es bekannt, eine Testeinheit einzusetzen, mittels derer der Zustand der Scheibe erfasst werden kann. Wird dann mit der Testeinheit eine solche Beeinträchtigung registriert, kann eine Warn- oder Störmeldung generiert werden, worauf ein Benutzer entsprechende Wartungsmaßnahmen einleiten kann.

Ein derartiger optischer Sensor ist aus der DE 197 06 612 C2 bekannt.

Der dort beschriebene optische Sensor umfasst ein in einem Gehäuse integriertes, Sendelichtstrahlen emittierendes erstes Sendeelement, wobei die Sendelichtstrahlen über eine Ablenkeinheit innerhalb eines vorgegebenen Winkelbereichs periodisch abgelenkt sind, parallel zu einer Fläche durch ein Austrittsfenster aus dem Gehäuse geführt sind und den Überwachungsbereich überstreichen. Von einem Objekt remittiertes Licht wird über das Austrittsfenster und die Ablenkeinheit zu einem Empfangselement geführt. Zur Kontrolle der Verschmutzung des zu der Fläche schräg verlaufenden Austrittsfensters werden von einem zweiten Sendeelement Testsendelichtstrahlen emittiert, welche über mit der Ablenkeinheit rotierende Umlenkmittel derart abgelenkt werden, dass diese am Strahlausgang der Umlenkmittel an einem in Drehrichtung der Ablenkeinheit verlaufenden Rand des Austrittsfensters austreten und dieses in im wesentlichen senkrechter Richtung zu der Fläche wenigstens einmal durchsetzen. Die am Rand des Austrittsfensters austretenden Testsendelichtstrahlen werden über die mit der Ablenkeinheit mitrotierenden Umlenkmittel einem zweiten Empfangselement zugeführt, sodass die dort auftreffende Lichtmenge als Maß für die Verschmutzung des Austrittsfensters auswertbar ist.

Die DE 197 32 776 C1 betrifft eine optoelektronische Vorrichtung zum Erfassen von Gegenständen in einem Überwachungsbereich mittels von einem in einem Gehäuse integrierten Sendeelement. Die vom Sendeelement emittierten Sendelichtstrahlen werden über eine Ablenkeinheit innerhalb eines vorgegebenen Winkelbereichs Ω periodisch abgelenkt durch ein Austrittsfenster aus dem Gehäuse geführt und überstreichen so den Überwachungsbereich. Zur Kontrolle der Verschmutzung des Austrittsfensters werden Testsendelichtstrahlen über Umlenkmittel zum Austrittsfenster geführt, wobei die Testsendelichtstrahlen das Austrittsfenster in vertikaler Richtung durchsetzen. Die das Austrittsfenster durchsetzende Lichtmenge der Testsendelichtstrahlen wird als Maß für die Verschmutzung des Austrittsfensters ausgewertet.

Der Erfindung liegt die Aufgabe zugrunde, einen optischen Sensor mit hoher Funktionssicherheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Ein wesentlicher Vorteil der Erfindung besteht darin, dass mit der Testeinheit eine vollständige Überprüfung der Scheibe hinsichtlich Beeinträchtigungen wie Verschmutzungen und Beschädigungen erreicht wird. Erfindungsgemäß ist die Testeinheit so ausgebildet, dass über die Höhe der Scheibe deren Durchlässigkeit ortsaufgelöst erfasst wird. Damit liefert die Testeinheit nicht nur eine Information darüber, ob eine Beeinträchtigung der Scheibe vorliegt. Vielmehr wird mit der Testeinheit erfasst, an welchen Stellen der Scheibe, gegebenenfalls lokal, Beeinträchtigungen der Durchlässigkeit der Scheibe sind und wie groß diese Beeinträchtigungen sind. Damit kann, insbesondere in der Auswerteeinheit, klassifiziert werden, ob diese Beeinträchtigungen sicherheitskritisch sind, das heißt ob diese eine fehlersichere Objektdetektion verhindern oder nicht.

Besonders vorteilhaft weist der optische Sensor darüber hinaus noch Testmittel auf, mittels derer die Funktionsfähigkeit der Testeinheit selbst überprüft werden kann.

Durch diese erfindungsgemäßen Maßnahmen zur Funktionsüberprüfung des optischen Sensors wird eine wesentliche Anforderung für den Einsatz des optischen Sensors im Bereich der Sicherheitstechnik erfüllt. Wird mit dem als Sicherheitssensor ausgebildeten optischen Sensor ein Gefahrenbereich an einer Anlage oder dergleichen überwacht, so wird vorteilhaft mit dem optischen Sensor ein Abschaltbefehl für die Anlage generiert, wenn im optischen Sensor ein Eindringen eines gefahrbringenden Objekts in den Gefahrenbereich registriert wird, oder wenn mit der Testeinheit eine sicherheitskritische Beeinträchtigung der Durchlässigkeit der Scheibe festgestellt wird, oder wenn im optischen Sensor eine Fehlfunktion festgestellt wird.

Erfindungsgemäß weist die Testeinheit eine erste, in Transmission arbeitende Testvorrichtung auf, mittels derer ortsunabhängig eine Beeinträchtigung der Durchlässigkeit der Scheibe feststellbar ist. Die Testeinheit weist eine zweite, in Reflexion arbeitende Testvorrichtung auf, mittels derer über die Höhe der Scheibe eine ortsaufgelöste Erfassung der Durchlässigkeit der Scheibe erfolgt.

Die in Transmission arbeitende erste Testvorrichtung bildet eine wesentliche sicherheitstechnische Komponente, da mit dieser direkt überprüft wird, ob der Durchgang der Lichtstrahlen der Sende-/ Empfangseinheit durch die Scheibe beeinträchtigt ist oder nicht.

Vorteilhaft weist die erste Testvorrichtung mehrere stationär im Gehäuse angeordnete Testsender auf, welche Testlichtstrahlen emittieren, die auf unterschiedliche Bereiche der Scheibe ausgerichtet sind. Die erste Testvorrichtung weist eine außerhalb des Gehäuses angeordnete Reflektoreinheit auf, auf welche die Testlichtstrahlen der Testsender ausgerichtet sind. Jedem Testsender in einer Detektionsposition ist ein Testdetektor als weiterer Bestandteil der Testeinheit so zugeordnet, dass die von diesem Testsender emittierten Testlichtstrahlen durchsetzen die Scheibe ist, auf die Reflektoreinheit treffen und von dort durch die Scheibe zum Testdetektor geführt sind.

Dabei weist der optische Sensor einen zweckmäßig den Testsendern zugeordneten, um eine Drehachse rotierenden Körper auf, welcher Führungsmittel zur Vorgabe der Detektionspositionen aufweist.

Insbesondere weist der rotierende Körper eine ein Führungsmittel bildende Durchgangsbohrung auf, wobei in den die Detektionspositionen definierenden Drehstellungen des rotierenden Körpers die von einem Testsender emittierten Testlichtstrahlen die Durchgangsbohrung durchsetzen und über die Reflektoreinheit zum Testdetektor geführt sind.

Durch diese Führungsmittel wird erreicht, dass die Testmessungen mit den einzelnen Testsendern zur Überprüfung der Scheibe zu vorgegebenen Zeiten einzeln nacheinander erfolgen. Damit werden gegenseitige Beeinflussungen der Testmessungen, die mit den einzelnen Testsendern durchgeführt werden, vermieden. Die Zeitabfolge der Testmessungen ist dabei im Wesentlichen durch die Drehzahl des rotierenden Körpers bestimmt.

Gemäß einer ersten Variante der ersten Testvorrichtung ist jedem Testsender ein stationär angeordneter Testdetektor benachbart zugeordnet.

Diese Variante zeichnet sich durch eine hohe Robustheit aus, da mit den Testsendern und den Testdetektoren alle elektronischen Komponenten der Testeinheit stationär im Gehäuse des optischen Sensors angeordnet sind.

Gemäß einer zweiten Variante der ersten Testvorrichtung ist auf dem rotierenden Körper ein Testdetektor angeordnet. In den die Detektionsposition definierenden Drehstellungen des rotierenden Körpers sind die von einem Testsender emittierten Testlichtstrahlen über das Führungsmittel und die Reflektoreinheit zum Testdetektor geführt. Durch die Drehbewegung des rotierenden Körpers ist der Testdetektor nacheinander in Drehpositionen den einzelnen Testsendern zugeordnet.

Vorteilhaft bei dieser Variante ist, dass nur ein Testdetektor zur Durchführung der Testmessungen benötigt wird. Durch die Drehbewegung des rotierenden Körpers wird der Testdetektor nacheinander dicht an die einzelnen Testsender herangeführt. Eine Testmessung mit einem Testsender erfolgt dann, wenn der Testdetektor unmittelbar benachbart zu diesem Testsender liegt.

Die zweite, in Reflexion arbeitende Testvorrichtung ergänzt die erste Testvorrichtung dahingehend, dass Beeinträchtigungen der Durchlässigkeit der Scheibe, die mit der ersten Testvorrichtung integral festgestellt werden, durch die durchgeführten Reflexionsmessungen örtlich aufgelöst analysiert werden. Insbesondere kann mit der zweiten Testvorrichtung dadurch festgestellt werden, ob die Beeinträchtigungen der Durchlässigkeit der Scheibe sicherheitskritisch sind oder nicht. Die zweite Testvorrichtung kann damit zur Erhöhung der Verfügbarkeit des optischen Sensors dienen, indem die mit der zweiten Testvorrichtung generierten Signale unnötige Abschaltbefehle der mit den optischen Sensoren überwachten Anlage vermeiden.

Besonders vorteilhaft ist die zweite Testvorrichtung auf dem um die Drehachse rotierenden Körper angeordnet, sodass für unterschiedliche Drehstellungen des rotierenden Körpers jeweils mit der zweiten Testvorrichtung über die Höhe der Scheibe eine ortsaufgelöste Erfassung der Durchlässigkeit der Scheibe erfolgt.

Gemäß der Erfindung weist die zweite Testvorrichtung eine Vertikalanordnung von mehreren Lichttastern auf.

Mit der so ausgebildeten zweiten Testvorrichtung kann über den gesamten Umfang der Scheibe eine ortsaufgelöste Detektion der Beeinträchtigung der Durchlässigkeit detektiert werden.

Die zweite Testvorrichtung kann sich dabei über die gesamte Höhe der Scheibe erstrecken. Dies ist jedoch nicht zwingend erforderlich. Vielmehr ist es ausreichend, wenn sich die zweite Testvorrichtung über den Höhenbereich der Sende-/ Empfangseinheit erstreckt, sodass der der Sende-/ Empfangseinheit zugeordnete Bereich der Scheibe mit der zweiten Testvorrichtung überprüft werden kann.

Gemäß einer vorteilhaften Ausgestaltung weist jeder Lichttaster ein Testsendelichtstrahlen emittierendes Testsendeelement und ein diesem zugeordnetes Testempfangselement auf. Prinzipiell können auch mehrere oder alle Testsendeelemente einem Testempfangselement zugeordnet sein. In diesem Fall können für unterschiedliche Testsendeelemente unterschiedliche Schwellwerte zur Bewertung der Empfangssignale als Testempfangselements vorgesehen sein. Die von dem Testsendeelement emittierten Testsendelichtstrahlen sind auf die Außenseite der Scheibe gerichtet und von dort zurückreflektiertes Streulicht ist auf das Testempfangselement geführt.

Wesentlich hierbei ist, dass zur Erkennung von Beeinträchtigungen der Durchlässigkeit der Scheibe bei den einzelnen Lichttastern nicht das direkt von der Scheibe zurückreflektierte Licht der Testsendelichtstrahlen sondern das zurückreflektierte Streulicht ausgewertet wird, da dieses repräsentativ für eventuelle Verschmutzungen der Scheibe ist. Zur Ausblendung des direkt reflektierten Lichts ist das Testempfangselement in geeignetem Abstand zum Testsendeelement des jeweiligen Lichttasters angeordnet. Zudem können dem Testsendeelement und dem Testempfangselement Blenden zugeordnet sein. Zur Unterdrückung von Fremdlichteinflüssen kann dem Testempfangselement eines Lichttasters ein optischer Filter vorgeordnet sein.

Die Strahlführung der Testsendelichtstrahlen ist durch Blenden oder zusätzliche optische Mittel wie Linsen so gestaltet, dass ein homogener Lichtfleck auf der Scheibenoberfläche generiert wird.

Weiterhin können dem Testempfangselement optische Mittel, wie Linsen, zugeordnet sein, sodass ein größerer Anteil des Streulichts erfasst werden kann.

Zur Detektion einer Verschmutzung der Scheibe kann jeder Lichttaster als binärer Lichttaster betrieben werden, das heißt die Empfangssignale der Testempfangselemente können jeweils mit einem Schwellwert bewertet werden. Vorteilhaft sind alle Lichttaster der zweiten Testvorrichtung identisch ausgebildet und gleich weit entfernt von der Scheibe. Dann kann für alle Lichttaster derselbe Schwellwert gewählt werden.

Die Wellenlängen der Testsendelichtstrahlen der einzelnen Lichttaster liegen vorteilhaft in dem Wellenlängenbereich der Lichtstrahlen der Sende-/ Empfangseinheit. Damit ist gewährleistet, dass mit der zweiten Testvorrichtung genau die Beeinträchtigungen der Scheibe erfasst werden, die auch die Lichtstrahlen der Sende-/ Empfangseinheit beeinflussen.

Besonders vorteilhaft sind die Testsendeelemente zyklisch einzeln nacheinander aktiviert.

Dadurch werden gegenseitige Beeinflussungen der Lichttaster der zweiten Testvorrichtung vermieden.

Weiter vorteilhaft werden die in den Lichttaster generierten Empfangssignale einzeln separat für unterschiedliche Drehpositionen des rotierenden Körpers ausgewertet.

Dadurch erfolgt über die gesamte Oberfläche der Scheibe eine ortsaufgelöste Verschmutzungskontrolle.

Gemäß einer vorteilhaften Ausgestaltung werden die Messergebnisse der ersten und zweiten Testvorrichtung in der Auswerteeinheit ausgewertet.

Die Auswerteeinheit übernimmt somit nicht nur die Steuerung der Sende-/ Empfangseinheit zur Objektdetektion, sondern auch die Steuerung der ersten und zweiten Testvorrichtung zur Scheibenüberwachung. Auch die Funktionskontrolle der Testeinheit erfolgt über die Auswerteeinheit, sodass diese die zentrale Steuerung des optischen Sensors übernimmt. Für den Einsatz des optischen Sensors im Bereich der Sicherheitstechnik weist die Auswerteeinheit einen redundanten Aufbau auf, vorzugsweise in Form zweier sich zyklisch gegenseitig überwachenden Rechnereinheiten.

Besonders vorteilhaft wird aus den Empfangssignalen des Testdetektors oder der Testdetektoren der ersten Testvorrichtung ein Ausgangssignal generiert, welches ein Maß für die Durchlässigkeit der Scheibe darstellt. In der Auswerteeinheit wird eine Störmeldung generiert, falls das Ausgangssignal einen Schwellwert unterschreitet.

Dabei wird mit der Störmeldung ein Abschaltbefehl für eine mit dem optischen Sensor überwachte Anlage generiert.

Weiterhin wird der Abschaltbefehl unterdrückt, wenn mit der zweiten Testvorrichtung eine nur lokal vorliegende Beeinträchtigung der Durchlässigkeit der Scheibe außerhalb des Bereichs, durch welchen die von dem Sender emittierten Lichtstrahlen geführt sind, detektiert wird.

Die erste Testvorrichtung bildet somit eine Sicherheitskomponente derart, dass bei Feststellung einer Beeinträchtigung der Durchlässigkeit der Scheibe ebenso wie bei einer Detektion eines sicherheitskritischen Objekts mittels der Sende-/ Empfangseinheit oder bei Auftreten einer Fehlfunktion des optischen Sensors ein Abschaltbefehl für die mit dem optischen Sensor überwachte Anlage generiert wird.

Die zweite Testvorrichtung bildet dagegen eine Komponente zur Erhöhung der Verfügbarkeit des optischen Sensors, da diese dafür sorgt, dass nicht sicherheitskritische Beeinträchtigungen der Durchlässigkeit der Scheibe nicht zu einem unnötigen Abschaltbefehl der Anlage führen.

Gemäß einer vorteilhaften Ausgestaltung der Erfindung weist diese eine Reinigungsvorrichtung zur Reinigung der Scheibe auf. Die Reinigungsvorrichtung ist in Abhängigkeit von Signalen der ersten Testvorrichtung und/oder der zweiten Testvorrichtung aktivierbar.

Mit der Reinigungsvorrichtung können selbsttätig Beeinträchtigungen der Scheibe entfernt werden, wodurch der manuelle Wartungsaufwand des optischen Sensors signifikant reduziert werden kann.

Besonders vorteilhaft wird in der Auswerteeinheit ein Aktivierungsbefehl für die Reinigungsvorrichtung generiert, falls das Ausgangssignal der ersten Testvorrichtung den oder einen weiteren Schwellwert unterschreitet.

Wird für die Aktivierung der Reinigungsvorrichtung derselbe Schwellwert zur Bewertung des Ausgangssignals der ersten Testvorrichtung herangezogen mit auch der Abschaltbefehl für den optischen Sensor aufgelöst wird, bedeutet dies, dass die Aktivierung der Reinigungsvorrichtung parallel mit dem Abschalten der Anlage erfolgt.

Alternativ kann die Aktivierung der Reinigungsvorrichtung dann erfolgen, wenn das Ausgangssignal einen weiteren Schwellwert unterschreitet, welcher relativ zum Schwellwert zur Generierung des Abschaltbefehls so gewählt ist, dass die Aktivierung der Reinigungsvorrichtung einsetzt, wenn noch kein Abschaltbefehl für die Anlage generiert ist. Diese Variante hat den Vorteil, dass die Reinigung der Scheibe vor einem Abschalten der Anlage erfolgt, das heißt unnötige Abschaltbefehle können so vermieden werden.

Gemäß einer ersten Variante kann die Reinigungsvorrichtung eine Anordnung von Ultraschallsendern aufweisen, wobei von diesen emittierte Ultraschallwellen in der Scheibe geführt sind.

Dabei sind die Ultraschallsender in Umfangsrichtung der Scheibe verteilt unterhalb dieser stationär angeordnet.

Mit der so ausgebildeten Reinigungsvorrichtung wird die Scheibe in Schwingungen versetzt, wodurch Verschmutzungen wie Staubablagerungen auf der Scheibe abgelöst werden können.

Alternativ oder zusätzlich ist die Reinigungsvorrichtung als Heizungsvorrichtung ausgebildet.

Mit der Heizungsvorrichtung können auf der Scheibe vorhandene Flüssigkeitsfilme entfernt werden.

Gemäß einer ersten Variante weist die Heizungsvorrichtung eine Anordnung von Infrarot-Leuchtdioden auf, welche auf dem rotierenden Körper so angeordnet sind, dass von diesen emittierte Infrarotstrahlen auf die Innenseite der Scheibe gerichtet sind.

Mit den von den Infrarot-Leuchtdioden emittierten Infrarotstrahlen wird die Scheibe erhitzt, sodass auf der Scheibe abgelagertes Wasser verdampft wird.

Gemäß einer zweiten Variante weist die Heizungsvorrichtung mehrere in Umfangsrichtung der Scheibe verteilte Heizwiderstände auf, die jeweils stationär unterhalb der Scheibe angeordnet sind.

Mit den Heizwiderständen wird eine nach oben gerichtete Wärmeströmung generiert, mit der die Scheibe aufgeheizt wird, wodurch auf der Scheibe abgelagertes Wasser verdampft wird.

Gemäß einer dritten Variante weist die Heizungsvorrichtung eine wärmeleitende, transparente Folie auf, die auf der Innenseite der Scheibe aufgebracht ist.

Die transparente Folie ist vorteilhaft als ITO (Indium-Zinn-Oxid)- Folie ausgebildet. Mit dieser Folie kann die Scheibe über ihre gesamte Fläche beheizt werden, ohne dass hierdurch der Strahlengang der Lichtstrahlen beeinträchtigt wird.

Gemäß einer vierten Variante weist die Heizungsvorrichtung eine auf die Innenseite der Scheibe aufgebrachte transparente Folie auf, in welcher als Heizelemente Leiterbahnen integriert sind.

Auch mit dieser Folie ist eine flächige Beheizung der Scheibe möglich. Da die Leiterbahnen nicht lichtdurchlässig sind, ist es zweckmäßig, in dem Bereich der Scheibe, in dem die vom Sender emittierten Lichtstrahlen austreten, keine Leiterbahnen vorzusehen, da ansonsten die Lichtstrahlen in ihrer Abstrahlcharakteristik beeinflusst würden.

Der erfindungsgemäße optische Sensor kann insbesondere als Distanzsensor ausgebildet sein. Durch die Erfassung der aktuellen Ablenkrichtung der Lichtstrahlen der Sende-/ Empfangseinheit und die Auswertung der mit der Sende-/ Empfangseinheit ermittelten Distanzwerte können mit dem optischen Sensor die Positionen von Objekten im Überwachungsbereich bestimmt werden. Die Distanzmessung kann insbesondere nach dem Phasenmessprinzip oder auch dem Impuls-Laufzeit-Verfahren erfolgen.

Gemäß einer ersten Ausgestaltung des optischen Sensors ist die Sende-/ Empfangseinheit um eine Drehachse rotierend angeordnet, das heißt in diesem Fall erfolgt die Ablenkung der Lichtstrahlen, indem die gesamte Sende-/ Empfangseinheit gedreht wird.

Gemäß einer weiteren Ausgestaltung des optischen Sensors ist die Sende-/ Empfangseinheit stationär im Gehäuse angeordnet. Die Lichtstrahlen sind über eine um eine Drehachse rotierende Ablenkeinheit geführt.

Die Erfindung wird im Folgenden anhand der Zeichnungen erläutert. Es zeigen:
- Figur 1:: Ausführungsbeispiel des erfindungsgemäßen optischen Sensors mit einer ersten Ausgestaltung einer Testeinheit für eine Scheibenüberwachung bei einer ersten Drehstellung eines rotierenden Körpers.
- Figur 1a:: Draufsicht auf die Oberseite des rotierenden Körpers mit dort angeordneten optischen Komponenten des optischen Sensors gemäß Figur 1.
- Figur 1b:: Schnittdarstellung durch die zweite Testvorrichtung für den optischen Sensor gemäß Figur 1.
- Figur 2:: Teildarstellung des optischen Sensors gemäß Figur 1 mit Komponenten der Testeinheit.
- Figur 3:: Optischer Sensor gemäß Figur 1 mit dem rotierenden Körper in einer zweiten Drehstellung.
- Figur 4:: Variante der Ausführungsform des optischen Sensors gemäß Figur 1.
- Figur 4a:: Draufsicht auf die Oberseite des rotierenden Körper mit dort angeordneten optischen Komponenten des optischen Sensors gemäß Figur 4.
- Figur 5:: Optischer Sensor gemäß Figur 1 mit einer zweiten Ausgestaltung einer Testeinheit für eine Scheibenüberwachung bei einer zweiten Drehstellung des rotierenden Körpers.
- Figur 6:: Teildarstellung des optischen Sensors gemäß Figur 5 mit Komponenten der Testeinheit für eine erste Variante der zweiten Testvorrichtung.
- Figur 7:: Optischer Sensor Figur 5 mit dem rotierenden Körper in einer zweiten Drehstellung mit einer zweiten Variante der zweiten Testvorrichtung.

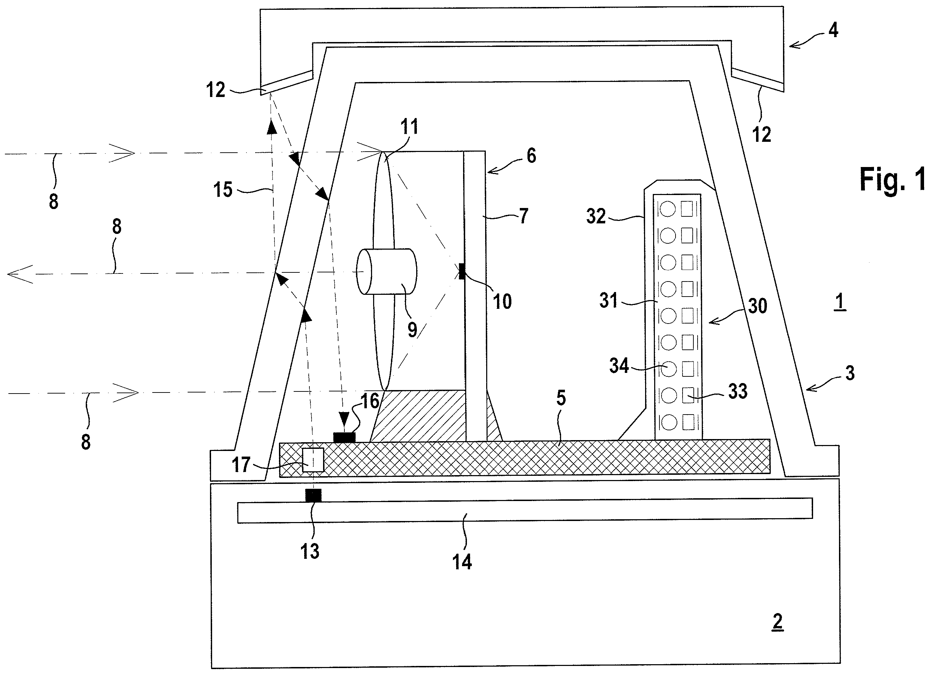

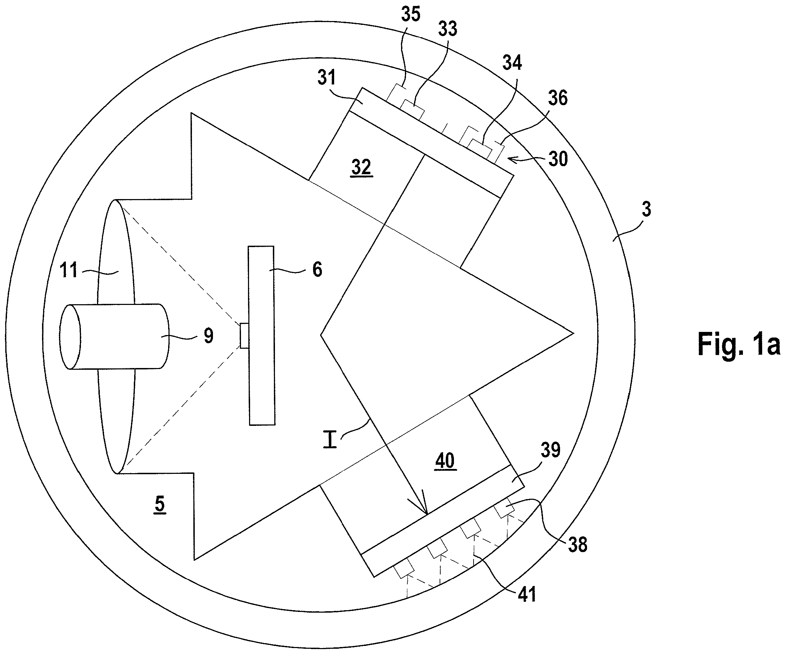

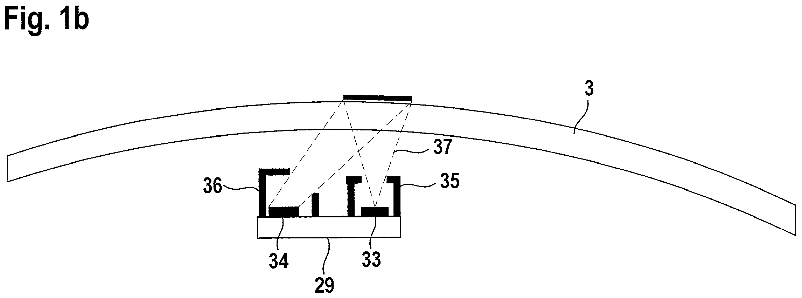

Figur 1 zeigt ein Ausführungsbeispiel eines optischen Sensors 1 zur Erfassung von Objekten in einem Überwachungsbereich. Der optische Sensor 1 weist einen stationären feststehenden Sockel 2 auf, auf welchem ein Gehäuse 3 befestigt ist, das heißt auch das Gehäuse 3 ist stationär angeordnet. Auf der Oberseite des Gehäuses 3 sitzt eine Kappe 4 fest auf, die somit auch stationär angeordnet ist. Das Gehäuse 3 weist einen kreisförmigen Querschnitt auf, der sich zu seiner Oberseite hin kontinuierlich verjüngt. Die Mantelfläche des Gehäuses 3 bildet eine lichtdurchlässige Scheibe.

Innerhalb des Gehäuses 3 befindet sich ein um eine Drehachse drehbarer rotierender Körper, der im vorliegenden Fall von einem kreisscheibenförmigen Teller 5 gebildet ist. Der Teller 5 liegt in einer horizontalen Ebene. Der Teller 5 wird um eine senkrechte Drehachse gedreht, die mit der Symmetrieachse des Gehäuses 3 zusammenfällt.

Der Teller 5 wird mittels eines Elektromotors in eine Drehbewegung versetzt. Der nicht gesondert dargestellte Stator befindet sich im feststehenden Sockel 2. Der ebenfalls nicht dargestellte Rotor ist mit dem Teller 5 verbunden.

Auf dem Teller 5 mitrotierend befindet sich eine Sende-/ Empfangseinheit 6 zur Erfassung der Objekte im Überwachungsbereich. Die Sende-/ Empfangseinheit 6 ist an einer auf dem Teller 5 aufsitzenden Halterung 7 gelagert. Die Sende-/ Empfangseinheit 6 weist einen Lichtstrahlen 8 emittierenden Sender 9 in Form einer Laserdiode auf. Weiterhin weist die Sende-/ Empfangseinheit 6 einen Empfänger 10 auf, dem eine Empfangsoptik 11 vorgeordnet ist. Zur Durchführung der Objektdetektion werden die vom Sender 9 emittierten Lichtstrahlen 8 durch die Scheibe in den Überwachungsbereich geführt. Die von einem Objekt zurückreflektierten Lichtstrahlen 8 werden durch die Scheibe geführt und gelangen über die Empfangsoptik 11 zum Empfänger 10, der von einer Photodiode gebildet sein kann. Durch die Drehbewegung der Sende-/ Empfangseinheit 6 werden die Lichtstrahlen 8 periodisch in einem flächigen Überwachungsbereich geführt, der sich über den vollen Winkelbereich von 360° oder Ausschnitten hiervon erstrecken kann.

Der optische Sensor 1 ist im vorliegenden Fall in Form eines nach dem Impuls-Laufzeit-Verfahren arbeitenden Distanzsensors ausgebildet. Hierzu emittiert der Sender 9 Lichtstrahlen 8 in Form von Folgen kurzer Lichtimpulse. Zur Distanzbestimmung wird die Laufzeit der Lichtimpulse zum Objekt und wieder zurück gemessen. Diese Auswertung erfolgt in einer nicht dargestellten Auswerteeinheit. Die Auswerteeinheit ist mit der Sende-/ Empfangseinheit 6 über eine berührungslos arbeitende Datenübertragungsstrecke verbunden. In der Auswerteeinheit wird auch die aktuelle Ablenkposition der Lichtstrahlen 8 erfasst. Daraus und aus den aktuellen Positionswerten können die Positionen von Objekten im Überwachungsbereich erfasst werden.

Der optische Sensor 1 ist als Sicherheitssensor ausgebildet. Hierzu weist die Auswerteeinheit einen redundanten Aufbau auf, vorzugsweise in Form zweier sich zyklisch gegenseitig überwachender Rechnereinheiten. Mit dem optischen Sensor 1 wird ein Gefahrenbereich an einer Anlage überwacht. Wird mit dem optischen Sensor 1 ein Eindringen eines sicherheitskritischen Objekts in den Gefahrenbereich festgestellt oder wird mit der Auswerteeinheit eine Fehlfunktion des optischen Sensors 1 aufgedeckt, generiert der optische Sensor einen Abschaltbefehl für die Anlage, um Gefährdungen für Personen zu vermeiden.

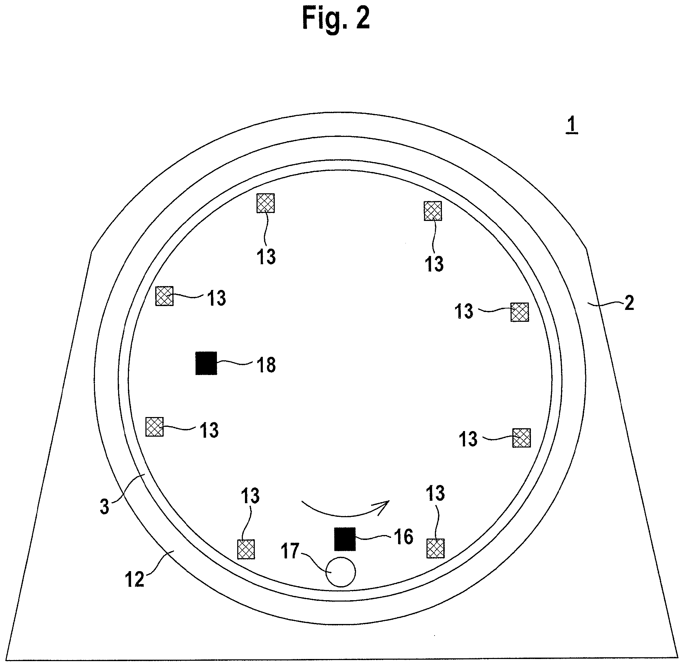

Zur Durchführung einer Scheibenüberwachung, das heißt zur Überprüfung, ob die Scheibe verschmutzt oder beschädigt und damit hinsichtlich ihrer Lichtdurchlässigkeit beeinträchtigt ist, ist eine Testeinheit vorgesehen, deren Komponenten in den Figuren 1a, 1b, 2 dargestellt sind. Die Testeinheit weist eine erste Testvorrichtung und eine zweite Testvorrichtung auf.

Die erste Testvorrichtung umfasst mehrere identisch ausgebildete Testsender 13, die auf der Oberseite einer im Sockel 2 stationär angeordneten Platine 14 angeordnet sind. Im vorliegenden Fall sind acht Testsender 13 vorgesehen, die im Randbereich der Platine 14 angeordnet sind und jeweils in identischen Winkelschritten aufeinanderfolgend in Umfangsrichtung der Platine 14 angeordnet sind.

Die Testsender 13 sind so angeordnet, dass die von ihnen emittierten Testlichtstrahlen 15 die Scheibe an verschiedenen Bereichen durchsetzen und dann auf den Reflektor 12 geführt sind.

Die erste Testvorrichtung umfasst weiterhin einen Testdetektor 16, der auf der Oberseite des Tellers 5 aufsitzt und mit diesem mitrotiert. Der Testdetektor 16 liegt im Randbereich dicht neben einer Durchgangsbohrung 17 im Teller 5, die ein Führungsmittel für die Testlichtstrahlen 15 bildet.

Zur Scheibenüberwachung mit der so gebildeten Testeinheit werden Testmessungen durchgeführt, die in der Auswerteeinheit ausgewertet werden. Befindet sich die Durchgangsbohrung 17 im Bereich eines des Testsenders 13, so werden die von diesem Testsender 13 emittierten Testlichtstrahlen 15 durch die Durchgangsbohrung 17 geführt, durchsetzen die Scheibe und gelangen zum Reflektor 12. Vom Reflektor 12 werden die Testlichtstrahlen 15 zurückreflektiert, sodass sie nochmals die Scheibe durchsetzen und dann auf den Testdetektor 16 auftreffen (Figur 1).

Durch die Drehbewegung des Tellers 5 wird der Testdetektor 16 nacheinander in Durchgangspositionen, das heißt zu den einzelnen Testsendern 13 geführt, sodass mit diesen zeitlich versetzt einzelne Testmessungen erfolgen.

In der Auswerteeinheit erfolgt zweckmäßig eine Schwellwertbewertung der Empfangssignale des Testdetektors 16. Auf diese Weise wird festgestellt, ob die Scheibe in ihrer Lichtdichtlässigkeit beeinträchtigt ist.

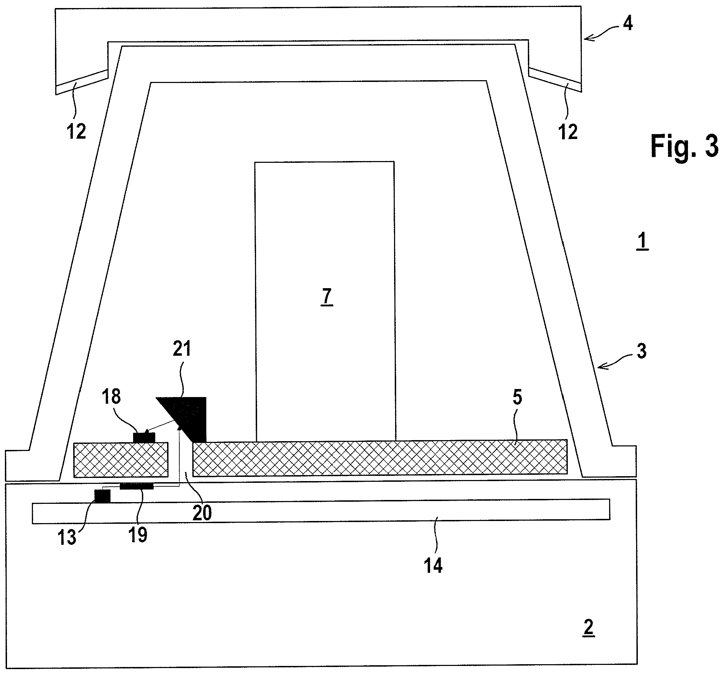

Zur Funktionsüberprüfung von Komponenten der ersten Testvorrichtung der Testeinheit, insbesondere zur Funktionsprüfung des Testsenders 13, ist auf der Oberseite des Tellers 5 ein weiterer Testdetektor 18 angeordnet. Der weitere Testdetektor 18 ist um etwa 90° versetzt zum ersten Testdetektor 16 auf dem Teller 5 angeordnet, wie Figur 2 zeigt. Dem weiteren Testdetektor 18 ist eine Referenzstrecke zugeordnet, die aus einem Lichtleiter 19 an der Unterseite des Tellers 5, einer an den Lichtleiter 19 anschließenden Bohrung 20 im Teller 5 und einem an der Oberseite des Tellers 5 angeordneten, an die Bohrung 20 anschließenden Reflektorelement 21 besteht (Figur 3).

Sobald sich der weitere Testdetektor 18 mit den Elementen der Referenzstrecke im Bereich eines Testsenders 13 befindet, werden die von diesem Testsender 13 emittierten Testlichtstrahlen 15 über die Elemente der Referenzstrecke zur Durchführung einer Referenzmessung geführt. Entspricht das am weiteren Testdetektor 18 dadurch generierte Empfangssignal innerhalb vorgegebener Toleranzgrenzen einem vorgegebenen Sollwert, liegt eine fehlerfreie Funktion dieser Elemente der Testeinheit vor. Falls keine solche Übereinstimmung mit dem Sollwert vorliegt, arbeitet eine dieser Komponenten fehlerhaft. Dann wird in der Auswerteeinheit eine Stör- oder Warnmeldung generiert.

Durch die Drehbewegung des Tellers 5 wird die Referenzstrecke mit den weiteren Testdetektoren 18 zu allen Testsendern 13 geführt, sodass zeitlich nacheinander für alle Testsender 13 in diskreten Referenzpositionen eine derartige Referenzmessung durchgeführt wird.

Die Testeinheit weist als zweite Testvorrichtung eine Anordnung von Lichttastern 30 auf, wie die Figuren 1, 1a zeigen. Die so gebildete zweite Testvorrichtung ist auf dem Teller 5 angeordnet und rotiert mit diesem mit. Die Lichttaster 30 sind auf einer Leiterplatte 31 angeordnet, die auf einem Sockel 32 befestigt ist.

Die Lichttaster 30 bilden eine Vertikalanordnung, das heißt sie sind in gleichen Abständen übereinander angeordnet. Der Sockel 32 ist etwas geneigt zur Vertikalen, sodass die Ebene der Leiterplatte 31 parallel zur Scheibe ausgerichtet ist, das heißt alle Lichttaster 30 sind in gleichem Abstand zur Scheibe angeordnet.

Wie insbesondere die Einzeldarstellung eines Lichttasters 30 gemäß Figur 1b zeigt, weist jeder Lichttaster 30 ein Testsendeelement 33 und ein Testempfangselement 34 auf, welche auf einer Platine 29 angeordnet sind. Das Testempfangselement 34 liegt horizontal versetzt und damit in Abstand zum Testsendeelement 33. Sowohl dem Testsendeelement 33 als auch dem Testempfangselement 34 ist eine Blende 35, 36 zugeordnet. Zur Detektion von Beeinträchtigungen der Scheibe werden vom Testsendeelement 33 Testsendelichtstrahlen 37 emittiert, deren Licht etwa im gleichen Wellenlängenbereich liegt wie die Lichtstrahlen der Sende-/ Empfangseinheit. Durch die Blenden 35, 36 wird der Direktreflex von der Scheibe ausgeblendet, sodass nur das von den Testsendelichtstrahlen 37 als Streulicht von der Scheibe zurückreflektierte Licht zum Testempfangselement 34 gelangt. Die dadurch am Testempfangselement 34 erhaltenen Empfangssignale werden mit einem Schwellwert bewertet. Durch diese Schwellwertbewertung wird festgestellt, ob lokal an diesem mit dem Lichttaster 30 untersuchten Bereich der Scheibe eine Beeinträchtigung der Scheibe vorliegt. Durch Auswertung der Empfangssignale aller Lichttaster 30 in der Auswerteeinheit können über nahezu die gesamte Höhe der Scheibe ortsaufgelöst Beeinträchtigungen der Scheibe festgestellt werden. Durch die Drehbewegung des Tellers 5 wird die Lichttasteranordnung entlang des gesamten Umfangs der Scheibe geführt, sodass für die gesamte Scheibenfläche eine ortsaufgelöste Detektion von Beeinträchtigungen der Scheibe erfolgt.

Die Lichttaster 30, insbesondere deren Testsendelichtstrahlen 37 werden von der Auswerteeinheit gesteuert. Dabei werden zur Vermeidung von gegenseitigen Beeinflussungen die Testsendelichtstrahlen 37 zyklisch einzeln nacheinander aktiviert.

Die Messergebnisse der ersten und zweiten Testvorrichtung werden in der Auswerteeinheit gemeinsam ausgewertet.

Aus den Empfangssignalen des Testdetektors oder der Testdetektoren der ersten Testvorrichtung wird ein Ausgangssignal abgeleitet, das ein Maß für die Durchlässigkeit der Scheibe ist. Dieses Ausgangssignal wird mit einem Schwellwert bewertet. Ergibt diese Schwellwertbewertung, dass eine Beeinträchtigung der Scheibe vorliegt, wird ein Abschaltbefehl für die mit dem optischen Sensor überwachte Anlage generiert.

Dieser Abschaltbefehl wird dann unterdrückt, wenn die mit der zweiten Testvorrichtung durchgeführte ortsaufgelöste Überwachung ergibt, dass die Beeinträchtigung der Durchlässigkeit der Scheibe nicht sicherheitskritisch ist. Dies ist insbesondere dann der Fall, wenn im Bereich der Scheibe, in welchem die Lichtstrahlen 8 des Senders 9 austreten, keine Beeinträchtigung der Durchlässigkeit vorliegt.

Gemäß einer vorteilhaften Variante werden die Ergebnisse der ersten und zweiten Testvorrichtung unabhängig voneinander ausgewertet und dann logisch verknüpft, wobei abhängig von der logischen Verknüpfung ein Abschaltbefehl generiert wird oder nicht.

Besonders vorteilhaft erfolgt eine ODER-Verknüpfung der Ergebnisse der ersten und zweiten Testvorrichtung derart, dass ein Abschaltbefehl dann generiert wird, wenn mit der ersten Testvorrichtung eine hohe Verschmutzung registriert wird oder wenn mit der zweiten Testvorrichtung eine sicherheitskritische Verschmutzung registriert wird.

Eine mit der ersten Testvorrichtung registrierte hohe Verschmutzung liegt vor, wenn diese oberhalb eines vorgegebenen Grenzwerts liegt. Eine mit der zweiten Testvorrichtung registrierte sicherheitskritische Verschmutzung liegt vor, wenn sich die Verschmutzung in dem Bereich der Scheibe befindet, durch welchen die vom Sender emittierten Lichtstrahlen 8 geführt sind oder sich die Verschmutzung in dem Bereich der Scheibe befindet, in welchem Lichtstrahlen aus dem Überwachungsbereich auf eine dem Empfänger 10 vorgeordnete Nahbereichsoptik treffen.

Wie Figur 1a zeigt, weist der optische Sensor 1 eine Reinigungsvorrichtung in Form einer Heizungsvorrichtung auf. Die Heizungsvorrichtung umfasst eine Matrixanordnung von Infrarot-Leuchtdioden 38, die auf einer weiteren Leiterplatte 39 gelagert sind, welche an einem weiteren, mit dem Teller 5 mit rotierenden Sockel 40 befestigt ist. Der Sockel 40 ist leicht geneigt zur Vertikalen, sodass die Infrarot-Leuchtdioden 38 über die Höhe der Scheibe verteilt in gleichen Abständen zu dieser angeordnet sind. Wie mit dem Pfeil I veranschaulicht, sind die Infrarot-Leuchtioden 38 an die Lichttaster 30 der zweiten Testvorrichtung angeschlossen.

Die Infrarot-Leuchtioden 38 emittieren Infrarotstrahlen 41, mit welchen die Scheibe beheizt wird. Durch die Drehbewegung des Tellers 5 wird die gesamte Scheibe beheizt, wodurch ein sich auf der Scheibe ablagernder Wasserfilter verdampft werden kann.

Die Heizungsvorrichtung oder allgemein die Reinigungsvorrichtung ist abhängig von den Signalen der ersten und/oder zweiten Testvorrichtung aktivierbar.

Im vorliegenden Fall wird die Heizungsvorrichtung oder allgemein die Reinigungsvorrichtung dann aktiviert, wenn das Ausgangssignal durch eine Schwellwertbewertung mit einem weiteren Schwellwert eine Beeinträchtigung der Durchlässigkeit der Scheibe signalisiert. Dieser weitere Schwellwert ist im Vergleich zum Schwellwert, der zur Generierung des Abschaltbefehls verwendet wird, so gewählt, dass die Aktivierung der Heizungsvorrichtung dann einsetzt, wenn noch kein Abschaltbefehl generiert wurde.

Während der Aktivierung der Heizungsvorrichtung wird die Heizleistung der Infrarot-Leuchtdioden 38 in Abhängigkeit der mit der zweiten Testvorrichtung generierten Signale geregelt.

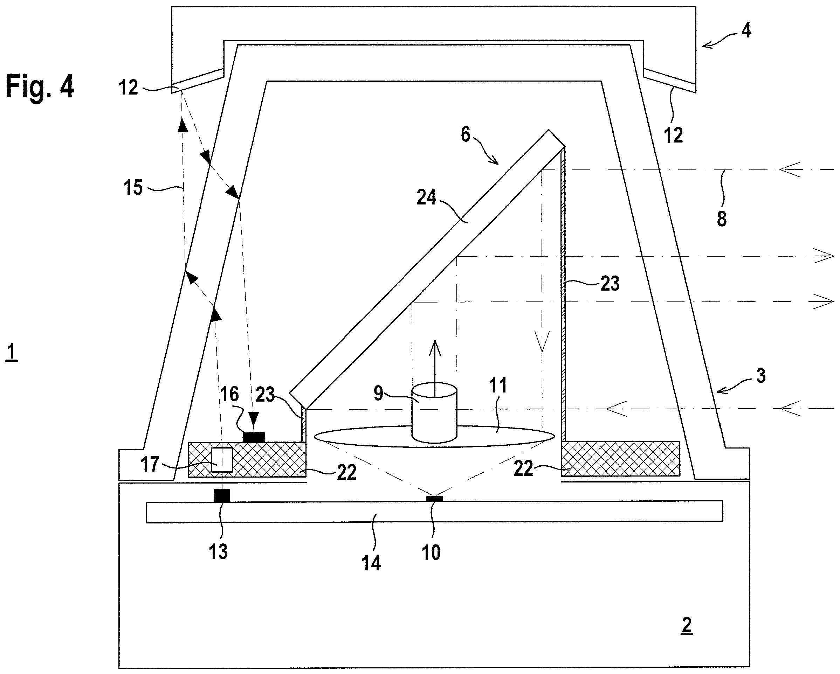

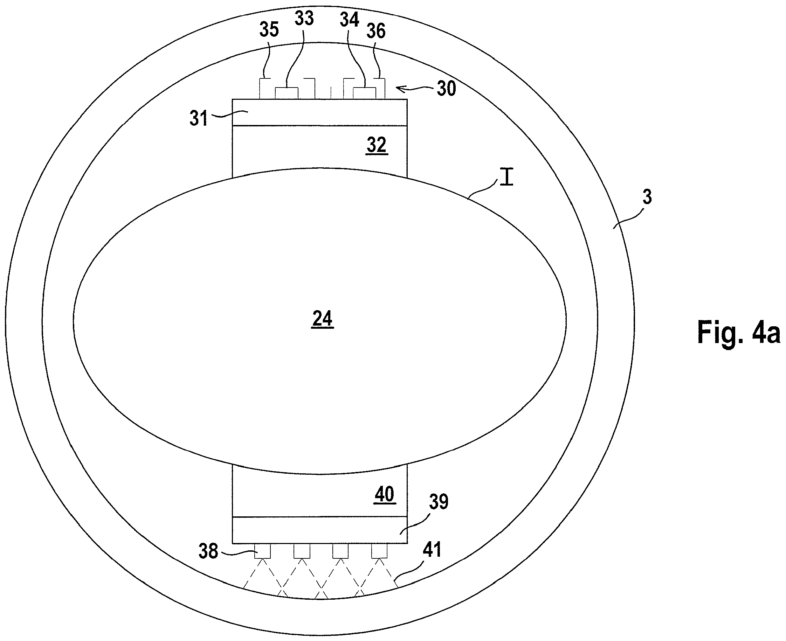

Figur 4 zeigt eine Variante des optischen Sensors 1 gemäß Figur 1. Im Unterschied zur Ausführungsform gemäß Figur 1 ist nun die Sende-/ Empfangseinheit 6 stationär im Gehäuse 3 angeordnet, wobei der Empfänger 10 auf der Platine 14 angeordnet ist und der Sender 9 mit der Empfangsoptik 11 diesem vorgeordnet ist.

Der auf dem Rotor des Elektromotors drehbar gelagerte rotierende Körper ist im vorliegenden Fall von einem Ring 22 gebildet. Auf dem Ring 22 ist mit Stegen 23 ein Umlenkspiegel 24 gelagert, der mit dem Ring 22 mitrotiert. Die vom Sender 9 emittieren Lichtstrahlen 8 werden durch die Ablenkung am Umlenkspiegel 24 periodisch innerhalb des Überwachungsbereichs geführt. Die Objektdetektion mit dieser Sender-/ Empfangseinheit 6 erfolgt in gleicher Weise wie bei der Ausführungsform gemäß Figur 1.

Auf dem Ring 22 als rotierender Körper sind die Komponenten der ersten Testvorrichtung der Testeinheit in gleicher Weise wie bei der Ausführungsform gemäß Figur 1 angeordnet. Auch die Testsender 13 sind wie bei der Ausführungsform der Figur 1 auf der Platine 14 angeordnet. Damit sind die ersten Testvorrichtungen der Testeinheiten beider Ausführungsformen der Figuren 1 und 4 identisch ausgebildet.

Wie Figur 4a zeigt, weist der optische Sensor 1 weiterhin eine zweite Testvorrichtung sowie eine Heizungsvorrichtung auf, welche der Ausführungsform der Figuren 1, 1a, 1b entsprechen.

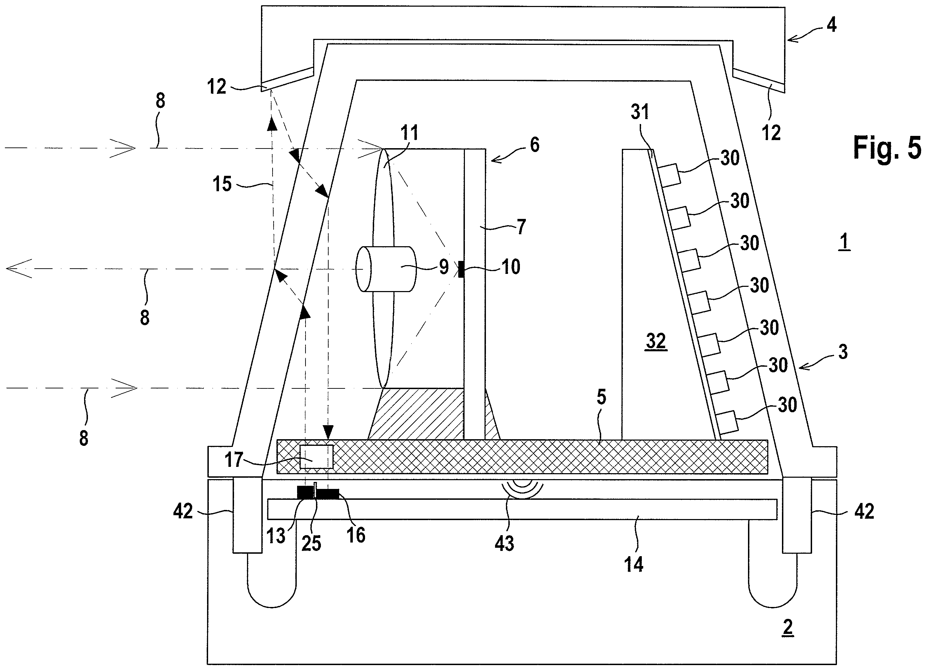

Die Figuren 5 bis 7 zeigen einen optischen Sensor 1, dessen Sende-/ Empfangseinheit 6 identisch mit der Ausführungsform gemäß Figur 1 ist. Prinzipiell könnte der optische Sensor 1 auch eine Sende-/ Empfangseinheit 6 gemäß der Ausführungsform von Figur 4 aufweisen.

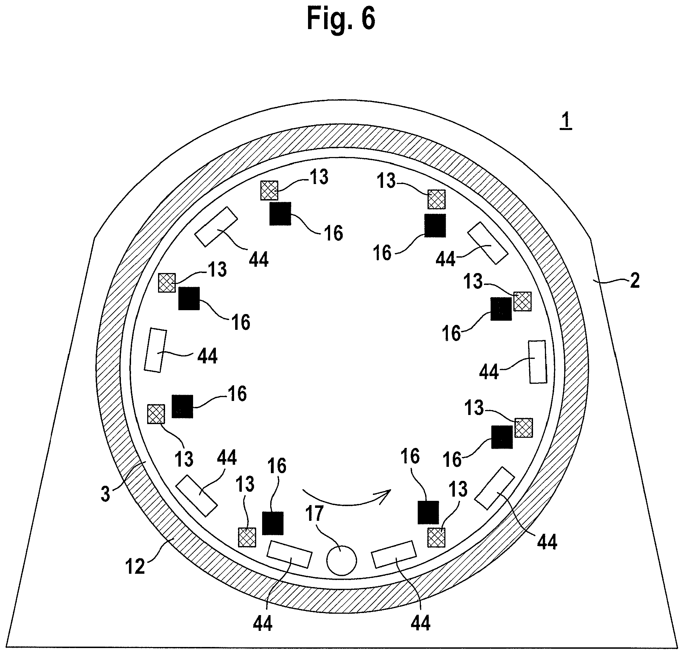

Bei der Ausführungsform gemäß den Figuren 5 bis 7 weist die erste Testvorrichtung der Testeinheit mehrere, im vorliegenden Fall acht identische Paare von Testsendern 13 und Testdetektoren 16 auf. Der Testsender 13 und der Testdetektor 16 eines Paares liegen dicht nebeneinander auf der Platine 14 und sind durch eine Kanaltrennung 25 optisch getrennt. Die Paare von Testsendern 13 und Testdetektoren 16 sind daher alle stationär im Gehäuse 3 angeordnet und jeweils um identische Winkelschritte versetzt zueinander angeordnet (Figur 6).

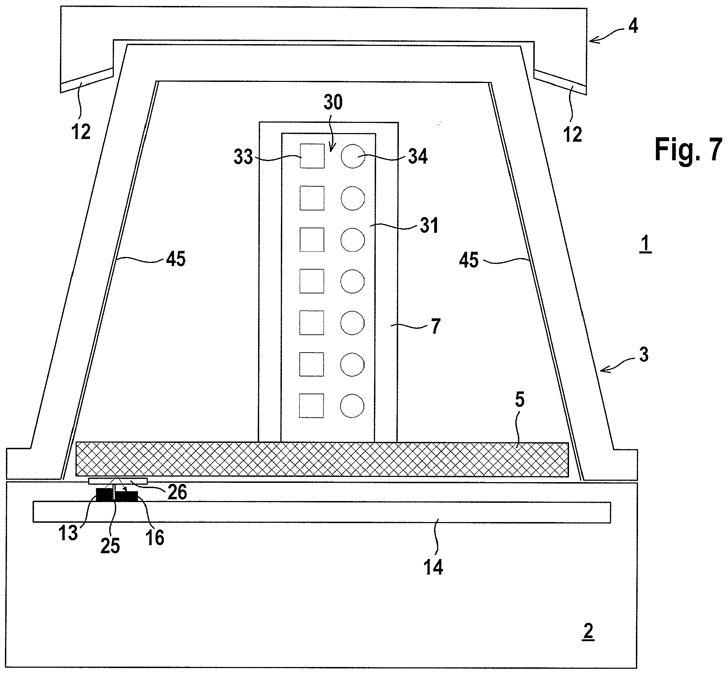

Auf dem Teller 5 befindet sich im Gegensatz zu der Ausführungsform gemäß Figur 1 kein Testdetektor 18. Vielmehr ist lediglich an einer Stelle des Tellers 5 eine Durchgangsbohrung 17 vorgesehen. Um einen bestimmten Winkel versetzt hierzu befindet sich lokal eine Referenzfläche 26 mit einer bestimmten, vorgegebenen Reflektivität (Figur 7). Die Ausdehnung der Referenzfläche 26 ist etwas größer als die von einem Paar eines Testsenders 13 und Testdetektors 16 beanspruchte Fläche.

Befindet sich die Durchgangsbohrung 17 vor einem Paar eines Testsenders 13 und Testdetektors 16 (wie Figur 5 zeigt) wird mit diesem Paar eine Testmessung zur Prüfung der Lichtdurchlässigkeit der Scheibe durchgeführt. Die vom Testsender 13 emittierten Testlichtstrahlen 15 durchsetzen die Durchgangsbohrung 17 und werden durch die Scheibe zum Reflektor 12 geführt. Die zum Reflektor 12 reflektierten Testlichtstrahlen 15 durchdringen dann nochmals die Scheibe und werden zum Testdetektor 16 dieses Paares geführt. Durch eine Amplitudenbewertung, insbesondere Schwellwertbewertung der Empfangssignale dieses Testdetektors 16 wird dann festgestellt, ob eine Beeinträchtigung der Lichtdurchlässigkeit der Scheibe vorliegt. Durch die Drehbewegung des Tellers 5 wird die Durchgangsbohrung 17 nacheinander zu allen Paaren von Testsendern 13 und Testdetektoren 16 geführt, sodass mit diesem einzeln nacheinander Testmessungen durchgeführt werden.

Wenn, wie Figur 7 zeigt, die Referenzfläche 26 oberhalb eines Paares eines Testsender 13 und Testdetektors 16 liegt, so wird mit diesem Testsender 13 und Testdetektor 16 eine Referenzmessung zur Funktionsüberprüfung dieser Komponenten der Testeinheit durchgeführt. Eine fehlerfreie Funktion dieser Komponenten liegt dann vor, wenn bei der Führung der Testlichtstrahlen 15 über die Referenzfläche 26 zum Testdetektor 16 ein Empfangssignal erhalten wird, das innerhalb von Toleranzgrenzen einem vorgegebenen Sollwert entspricht.

Die Ausbildung der zweiten Testvorrichtung entspricht der Ausführungsform der Figur 1. Demzufolge umfasst die zweite Testvorrichtung wieder eine Vertikalanordnung von Lichttastern 30 auf der Leiterplatte 31, wobei die Leiterplatte 31 an dem mit dem Teller 5 mitdrehenden Sockel 32 befestigt ist.

Die Auswertung der Signale der ersten und zweiten Testvorrichtung erfolgt analog zur Ausführungsform gemäß Figur 1.

Für den optischen Sensor können unterschiedliche Ausführungsformen von Reinigungsvorrichtungen vorgesehen sein.

In Figur 5 ist ein erstes Beispiel einer Reinigungsvorrichtung dargestellt. Dort weist die Reinigungsvorrichtung eine Anordnung von Ultraschallsendern 42 auf, die stationär unterhalb der Scheibe über deren Umfang verteilt angeordnet sind. Die Ultraschallsender 42 sind an die Platine 14 angeschlossen. Mit von den Ultraschallsendern 42 emittierten Ultraschallwellen wird die Scheibe in Schwingungen versetzt. Durch diese mechanischen Schwingungen können Verschmutzungen auf der Scheibe wie zum Beispiel Staubablagerungen abgelöst werden. Das Regelsignal der ersten Testvorrichtung für den Betrieb der Ultraschallsender 42 wird über eine drahtlose Übertragungsstrecke 43 übertragen.

In Figur 6 ist ein zweites Beispiel einer Reinigungsvorrichtung dargestellt. In diesem Fall ist die Reinigungsvorrichtung als Heizungsvorrichtung ausgebildet, wobei diese eine Anordnung von Heizwiderständen 44 aufweist. Die Heizwiderstände sind am Rand der Platine 14 in Umfangsrichtung verteilt angeordnet. Dabei sitzen die Heizwiderstände auf der Oberseite der Platine 14. Mit dem Heizwiderstand 44 wird eine nach oben gerichtete Wärmeströmung generiert, die die Scheibe beheizt.

In Figur 7 ist als weiteres Beispiel einer Heizungsvorrichtung eine ITO-Folie 45 dargestellt, die sich über die gesamte Innenseite der Scheibe erstreckt. Diese ITO-Folie 45 ist über elektrische Leitungen 46 an die Platine 14 angeschlossen.

Die Ansteuerung der angeführten Reinigungsvorrichtung erfolgt analog zur Ausführungsform gemäß Figur 1.

### Bezugszeichenliste

- (1): Optischer Sensor
- (2): Sockel
- (3): Gehäuse
- (4): Kappe
- (5): Teller
- (6): Sende/- Empfangseinheit
- (7): Halterung
- (8): Lichtstrahlen
- (9): Sender
- (10): Empfänger
- (11): Empfangsoptik
- (12): Reflektor
- (13): Testsender
- (14): Platine
- (15): Testlichtstrahlen
- (16): erster Testdetektor
- (17): Durchgangsbohrung
- (18): zweiter Testdetektor
- (19): Lichtleiter
- (20): Bohrung
- (21): Reflektorelement
- (22): Ring
- (23): Stege
- (24): Umlenkspiegel
- (25): Kanaltrennung
- (26): Referenzfläche
- (29): Platine
- (30): Lichttaster
- (31): Leiterplatte
- (32): Sockel
- (33): Testsendeelement
- (34): Testempfangselement
- (35): Blende
- (36): Blende
- (37): Testsendelichtstrahlen
- (38): Infrarot-Leuchtdiode
- (39): Leiterplatte
- (40): Sockel
- (41): Infrarotstrahlen
- (42): Ultraschallsender
- (43): drahtlose Übertragungsstrecke
- (44): Heizwiderstand
- (45): ITO-Folie
- (46): elektrische Leitung
- ( I ): Pfeil

## Patentansprüche

1. Optischer Sensor (1) zur Erfassung von Objekten in einem Überwachungsbereich mit einem Gehäuse (3) umfassend eine Scheibe, einer Auswerteeinheit und einer innerhalb des Gehäuses (3) angeordneten Sende-/ Empfangseinheit (6), die ausgebildet ist, von einem Sender (9) der Sende-/ Empfangseinheit (6) emittierte Lichtstrahlen (8) periodisch innerhalb des Überwachungsbereichs zu führen und dabei die Scheibe zu durchsetzen, wobei der optische Sensor (1) dazu ausgebildet ist, die von einem Objekt zurückreflektierte Lichtstrahlen (8) durch die Scheibe zu einem Empfänger (10) der Sende-/ Empfangseinheit (6) zu führen und in der Auswerteeinheit Empfangssignale des Empfängers (10) zur Generierung eines Objektfeststellungsignals auszuwerten, und wobei eine Testeinheit zur Überprüfung der Durchlässigkeit der Scheibe vorgesehen ist, wobei die Testeinheit eine erste, in Transmission arbeitende Testvorrichtung aufweist, mittels derer ortsunabhängig eine Beeinträchtigung der Durchlässigkeit der Scheibe feststellbar ist indem prüfbar ist, ob der Durchgang der Lichtstrahlen (8) durch die Scheibe beeinträchtigt ist, **dadurch gekennzeichnet, dass** die Testeinheit ausgebildet ist, die Durchlässigkeit der Scheibe über deren Höhe ortsaufgelöst zu erfassen, und dass die Testeinheit eine zweite, in Reflexion arbeitende Testvorrichtung aufweist, mittels derer das von der Scheibe zurückreflektierte Streulicht ausgewertet wird, mittels derer über die Höhe der Scheibe eine ortsaufgelöste Erfassung der Durchlässigkeit der Scheibe erfolgt, wobei die zweite Testvorrichtung eine Vertikalanordnung von mehreren Lichttastern (30) aufweist.

2. Optischer Sensor (1) nach Anspruch 1, **dadurch gekennzeichnet, dass** die zweite Testvorrichtung auf einem um eine Drehachse rotierenden Körper angeordnet ist, sodass für unterschiedliche Drehstellungen des rotierenden Körpers jeweils mit der zweiten Testvorrichtung über die Höhe der Scheibe eine ortsaufgelöste Erfassung der Durchlässigkeit der Scheibe erfolgt.

3. Optischer Sensor (1) nach einem der Ansprüche 1 oder 2, **dadurch gekennzeichnet, dass** jeder Lichttaster (30) ein Testsendelichtstrahlen (37) emittierendes Testsendeelement (33) und ein diesem zugeordnetes Testempfangselement (34) aufweist, wobei die von dem Testsendeelement (33) emittierten Testsendelichtstrahlen (37) auf die Außenseite der Scheibe gerichtet sind und von dort zurück reflektiertes Streulicht auf das Testempfangselement (34) geführt ist.

4. Optischer Sensor (1) nach einem der Ansprüche 1 bis 3, **dadurch gekennzeichnet, dass** zur Ausbildung der Lichttaster (30) mehrere Testsendeelemente (33) einem Testempfangselement (34) zugeordnet sind.

5. Optischer Sensor (1) nach einem der Ansprüche 3 oder 4, **dadurch gekennzeichnet, dass** die Testsendeelemente (33) zyklisch einzeln nacheinander aktivierbar sind.

6. Optischer Sensor (1) nach einem der Ansprüche 3 bis 5, **dadurch gekennzeichnet, dass** die in den Lichttastern (30) generierten Empfangssignale einzeln separat für unterschiedliche Drehpositionen des rotierenden Körpers ausgewertet werden.

7. Optischer Sensor (1) nach einem der Ansprüche 1 bis 6, **dadurch gekennzeichnet, dass** die erste Testvorrichtung mehrere stationär im Gehäuse (3) angeordnete Testsender (13) aufweist, die ausgebildet sind, Testlichtstrahlen (15 zu emittieren, die auf unterschiedliche Bereiche der Scheibe ausgerichtet sind, dass die erste Testvorrichtung eine außerhalb des Gehäuses (3) angeordnete Reflektoreinheit aufweist, auf welche die Testlichtstrahlen (15) der Testsender (13) ausgerichtet sind, und dass jedem Testsender (13) in einer Detektionsposition ein Testdetektor (16) als weiterer Bestandteil der Testeinheit so zugeordnet ist, dass die von diesem Testsender (13) emittierten Testlichtstrahlen (15) die Scheibe durchsetzen, auf die Reflektoreinheit treffen und von dort durch die Scheibe zum Testdetektor (16) geführt sind.

8. Optischer Sensor (1) nach einem der Ansprüche 1 bis 7, **dadurch gekennzeichnet, dass** die Auswerteeinheit ausgebildet ist, die Messergebnisse der ersten und zweiten Testvorrichtung auszuwerten.

9. Optischer Sensor (1) nach Anspruch 7, **dadurch gekennzeichnet, dass** der Sensor ausgebildet ist, aus den Empfangssignalen der Testdetektoren (16) der ersten Testvorrichtung ein Ausgangssignal zu generieren, welches ein integrales Maß für die Durchlässigkeit der Scheibe darstellt, und dass die Auswerteeinheit ausgebildet ist, eine Störmeldung zu generieren, falls das Ausgangssignal einen Schwellwert unterschreitet.

10. Optischer Sensor (1) nach Anspruch 9, **dadurch gekennzeichnet, dass** der Sensor ausgebildet ist, mit der Störmeldung einen Abschaltbefehl für eine mit dem optischen Sensor überwachte Anlage zu generieren.

11. Optischer Sensor (1) nach Anspruch 10, **dadurch gekennzeichnet, dass** der Sensor ausgebildet ist, den Abschaltbefehl zu unterdrücken, wenn mit der zweiten Testvorrichtung eine nur lokal vorliegende Beeinträchtigung der Durchlässigkeit der Scheibe außerhalb des Bereichs, durch welchen die von dem Sender (9) emittierten Lichtstrahlen (8) geführt sind, detektiert wird.

12. Optischer Sensor nach einem der Ansprüche 10 oder 11, **dadurch gekennzeichnet, dass** der Sensor ausgebildet ist, einen Abschaltbefehl dann zu generieren, wenn mit der ersten Testvorrichtung eine hohe Verschmutzung der Scheibe registriert wird oder mit der zweiten Testvorrichtung eine sicherheitstechnische Verschmutzung registriert wird.

13. Optischer Sensor (1) nach einem der Ansprüche 1 bis 12, **dadurch gekennzeichnet, dass** diese eine Reinigungsvorrichtung zur Reinigung der Scheibe aufweist, wobei die Reinigungsvorrichtung in Abhängigkeit von Signalen der ersten Testvorrichtung und/oder der zweiten Testvorrichtung aktivierbar ist.

14. Optischer Sensor (1) nach Anspruch 13, **dadurch gekennzeichnet, dass** die Auswerteeinheit ausgebildet ist, einen Aktivierungsbefehl für die Reinigungsvorrichtung zu generieren, falls das Ausgangssignal der ersten Testvorrichtung den oder einen weiteren Schwellwert unterschreitet.

15. Optischer Sensor (1) nach einem der Ansprüche 13 oder 14, **dadurch gekennzeichnet, dass** die Leistung der Reinigungsvorrichtung in Abhängigkeit der Empfangssignale der Testempfangselemente (34) der zweiten Testvorrichtung regelbar ist.

16. Optischer Sensor (1) nach einem der Ansprüche 13 bis 15, **dadurch gekennzeichnet, dass** die Reinigungsvorrichtung eine Anordnung von Ultraschallsendern (42) aufweist, die ausgebildet sind, emittierte Ultraschallwellen in der Scheibe zu führen.

17. Optischer Sensor (1) nach Anspruch 16, **dadurch gekennzeichnet, dass** die Ultraschallsender (42) in Umfangsrichtung der Scheibe verteilt unterhalb dieser stationär angeordnet sind.

18. Optischer Sensor (1) nach einem der Ansprüche 13 bis 17, **dadurch gekennzeichnet, dass** die Reinigungsvorrichtung als Heizungsvorrichtung ausgebildet ist.

19. Optischer Sensor (1) nach Anspruch 18, **dadurch gekennzeichnet, dass** die Heizungsvorrichtung eine Anordnung von Infrarot-Leuchtdioden (38) aufweist, welche auf dem rotierenden Körper so angeordnet sind, dass von diesen emittierte Infrarotstrahlen (41) auf die Innenseite der Scheibe gerichtet sind.

20. Optischer Sensor (1) nach Anspruch 18, **dadurch gekennzeichnet, dass** die Heizungsvorrichtung mehrere in Umfangsrichtung der Scheibe verteilte Heizwiderstände aufweist, die jeweils stationär unterhalb der Scheibe angeordnet sind.

21. Optischer Sensor (1) nach Anspruch 18, **dadurch gekennzeichnet, dass** die Heizungsvorrichtung eine wärmeleitende, transparente Folie aufweist, die auf der Innenseite der Scheibe aufgebracht ist.

22. Optischer Sensor (1) nach Anspruch 18, **dadurch gekennzeichnet, dass** die Heizungsvorrichtung eine auf die Innenseite der Scheibe aufgebrachte transparente Folie aufweist, in welcher als Heizelemente Leiterbahnen integriert sind.

## Claims

1. An optical sensor (1) for detecting objects in a surveillance area with a housing (3) comprising a disc, an evaluation unit and a transmitting/receiving unit (6) arranged within the housing (3), which is designed to guide light beams (8) emitted by a transmitter (9) of the transmitting/receiving unit (6) periodically within the surveillance area and thereby to pass through the disc, wherein the optical sensor (1) is designed to guide the light beams (8) reflected back from an object through the disc to a receiver (10) of the transmitter/receiver unit (6) and to evaluate received signals from the receiver (10) in the evaluation unit to generate an object detection signal, and wherein a test unit is provided for checking the permeability of the disc, wherein the test unit has a first test device which operates in transmission and by means of which an impairment of the permeability of the pane can be determined independently of location by testing whether the passage of the light beams (8) through the pane is impaired, **characterised in that** the test unit is designed to detect the permeability of the pane in a spatially resolved manner over its height, and **in that** the test unit has a second test device operating in reflection, by means of which the scattered light reflected back from the pane is evaluated, by means of which a spatially resolved detection of the transmittance of the pane is carried out over the height of the pane, the second test device having a vertical arrangement of a plurality of light scanners (30).

2. An optical sensor (1) according to claim 1, **characterised in that** the second test device is arranged on a body rotating about an axis of rotation, so that for differrent rotational positions of the rotating body, spatially resolved detection of the transmittance of the pane is achieved in each case with the second test device over the height of the pane.

3. An optical sensor (1) according to one of claims 1 or 2, **characterised in that** each light sensor (30) has a test transmitting element (33) emitting test transmitting light beams (37) and a test receiving element (34) associated therewith, wherein the test transmitting light beams (37) emitted by the test transmitting element (33) are directed onto the outside of the disc and scattered light reflected back from there is guided onto the test receiving element (34).

4. An optical sensor (1) according to one of claims 1 to 3, **characterised in that** a plurality of test transmitting elements (33) are assigned to a test receiving element (34) to form the light sensors (30).

5. An optical sensor (1) according to one of claims 3 or 4, **characterised in that** the test transmitting elements (33) can be activated cyclically one after the other.

6. An optical sensor (1) according to one of claims 3 to 5, **characterised in that** the received signals generated in the light scanners (30) are evaluated individually separately for different rotational positions of the rotating body.

7. An optical sensor (1) according to one of claims 1 to 6, **characterised in that** the first test device has a plurality of test transmitters (13) which are arranged stationarily in the housing (3) and are designed to emit test light beams (15) which are aligned with different regions of the disc, **in that** the first test device has a reflector unit arranged outside the housing (3), onto which the test light beams (15) of the test transmitters (13) are aligned, and **in that** a test sensor (16) is assigned to each test transmitter (13) in a detection position as a further component of the test unit in such a way that the test light beams (15) emitted by this test transmitter (13) pass through the disc, strike the reflector unit and are guided from there through the disc to the test sensor (16).

8. An optical sensor (1) according to one of claims 1 to 7, **characterised in that** the evaluation unit is designed to evaluate the measurement results of the first and second test device.

9. An optical sensor (1) according to claim 7, **characterised in that** the sensor is designed to generate an output signal from the received signals of the test sensors (16) of the first test device, which output signal represents an integral measure of the permeability of the pane, and **in that** the evaluation unit is designed to generate a fault message if the output signal falls below a threshold value.

10. An optical sensor (1) according to claim 9, **characterised in that** the sensor is designed to generate a switch-off command for a system monitored by the optical sensor with the fault signal.

11. An optical sensor (1) according to claim 10, **characterised in that** the sensor is designed to suppress the switch-off command if the second test device detects only a local impairment of the permeability of the pane outside the area through which the light beams (8) emitted by the transmitter (9) are guided.

12. An optical sensor according to one of claims 10 or 11, **characterised in that** the sensor is designed to generate a switch-off command when a high level of soiling of the pane is registered with the first test device or a safety-related soiling is registered with the second test device.

13. An optical sensor (1) according to one of claims 1 to 12, **characterised in that** it has a cleaning device for cleaning the pane, wherein the cleaning device can be activated as a function of signals from the first test device and/or the second test device.

14. An optical sensor (1) according to claim 13, **characterised in that** the evaluation unit is designed to generate an activation command for the cleaning device if the output signal of the first test device falls below the threshold value or a further threshold value.

15. An optical sensor (1) according to one of claims 13 or 14, **characterised in that** the power of the cleaning device can be regulated as a function of the received signals of the test receiving elements (34) of the second test device.

16. An optical sensor (1) according to one of claims 13 to 15, **characterised in that** the cleaning device has an arrangement of ultrasonic transmitters (42) which are designed to guide emitted ultrasonic waves in the disc.

17. An optical sensor (1) according to claim 16, **characterised in that** the ultrasonic transmitters (42) are distributed in the circumferential direction of the disc and are arranged in a stationary manner below the disc.

18. An optical sensor (1) according to one of claims 13 to 17, **characterised in that** the cleaning device is designed as a heating device.

19. An optical sensor (1) according to claim 18, **characterised in that** the heating device has an arrangement of infrared light-emitting diodes (38) which are arranged on the rotating body in such a way that infrared rays (41) emitted by them are directed onto the inside of the disc.

20. An optical sensor (1) according to claim 18, **characterised in that** the heating device has a plurality of heating resistors distributed in the circumferential direction of the disc, each of which is arranged stationary below the disc.

21. An optical sensor (1) according to claim 18, **characterised in that** the heating device has a thermally conductive, transparent film which is applied to the inside of the pane.

22. An optical sensor (1) according to claim 18, **characterised in that** the heating device has a transparent film which is applied to the inside of the pane and in which conductor tracks are integrated as heating elements.

## Revendications

1. Capteur optique (1) pour la détection d'objets dans une zone de surveillance avec un boîtier (3) comprenant un disque, une unité d'évaluation et une unité d'émission/réception (6) disposée à l'intérieur du boîtier (3), qui est conçue pour guider les faisceaux lumineux (8) émis par un émetteur (9) de l'unité d'émission/ réception (6) périodiquement à l'intérieur de la zone de surveillance et ainsi pour passer à travers le disque, dans lequel le capteur optique (1) est conçu pour guider les faisceaux lumineux (8) réfléchis par un objet à travers le disque vers un récepteur (10) de l'unité d'émission/réception (6) et pour évaluer les signaux reçus du récepteur (10) dans l'unité d'évaluation afin de générer un signal de détection d'objet, et dans lequel une unité d'essai est prévue pour vérifier la perméabilité du disque, dans laquelle l'unité d'essai possède un premier dispositif d'essai qui fonctionne en transmission et au moyen duquel une altération de la perméabilité de la vitre peut être déterminée indépendamment de l'emplacement en testant si le passage des faisceaux lumineux (8) à travers la vitre est altéré, **caractérisé en ce que** l'unité d'essai est conçue pour détecter la perméabilité de la vitre de manière résolue dans l'espace sur sa hauteur, et **en ce que** l'unité d'essai comporte un second dispositif d'essai fonctionnant en réflexion, au moyen duquel la lumière diffusée renvoyée par la vitre est évaluée, ce qui permet d'effectuer une détection résolue dans l'espace de la perméabilité de la vitre sur la hauteur de la vitre, le second dispositif d'essai comportant une disposition verticale d'une pluralité de scanners de lumière (30).

2. Capteur optique (1) selon la revendication 1, **caractérisé en ce que** le second dispositif d'essai est disposé sur un corps tournant autour d'un axe de rotation, de sorte que pour différentes positions de rotation du corps tournant, une détection résolue dans l'espace de la perméabilité de la vitre est réalisée dans chaque cas avec le second dispositif d'essai sur la hauteur de la vitre.

3. Capteur optique (1) selon l'une des revendications 1 ou 2, **caractérisé en ce que** chaque capteur de lumière (30) comporte un élément émetteur d'essai (33) émettant des faisceaux lumineux de transmission d'essai (37) et un élément récepteur d'essai (34) qui lui est associé, les faisceaux lumineux de transmission d'essai (37) émis par l'élément émetteur d'essai (33) étant dirigés sur l'extérieur du disque et la lumière diffusée qui y est réfléchie étant guidée sur l'élément récepteur d'essai (34).

4. Capteur optique (1) selon l'une des revendications 1 à 3, **caractérisé en ce qu'**une pluralité d'éléments de transmission d'essai (33) sont affectés à un élément de réception d'essai (34) pour former les capteurs de lumière (30).

5. Capteur optique (1) selon l'une des revendications 3 ou 4, **caractérisé en ce que** les éléments de transmission d'essai (33) peuvent être activés cycliquement l'un après l'autre.

6. Capteur optique (1) selon l'une des revendications 3 à 5, **caractérisé en ce que** les signaux reçus générés dans les capteurs de lumière (30) sont évalués individuellement séparément pour différentes positions de rotation du corps rotatif.

7. Capteur optique (1) selon l'une des revendications 1 à 6, **caractérisé en ce que** le premier dispositif d'essai comporte une pluralité d'émetteurs d'essai (13) qui sont disposés de manière stationnaire dans le boîtier (3) et sont conçus pour émettre des faisceaux lumineux d'essai (15) qui sont alignés avec différentes régions du disque, **en ce que** le premier dispositif d'essai comporte une unité de réflecteur disposée à l'extérieur du boîtier (3), sur laquelle les faisceaux lumineux d'essai (15) des émetteurs d'essai (13) sont alignés, et **en ce qu'**un capteur d'essai (16) est affecté à chaque émetteur d'essai (13) dans une position de détection en tant que composant supplémentaire de l'unité d'essai de telle sorte que les faisceaux lumineux d'essai (15) émis par cet émetteur d'essai (13) passent à travers le disque, frappent l'unité de réflecteur et sont guidés de là à travers le disque jusqu'au capteur d'essai (16).

8. Capteur optique (1) selon l'une des revendications 1 à 7, **caractérisé en ce que** l'unité d'évaluation est conçue pour évaluer les résultats de mesure du premier et du second dispositif d'essai.

9. Capteur optique (1) selon la revendication 7, **caractérisé en ce que** le capteur est conçu pour générer un signal de sortie à partir des signaux reçus des capteurs d'essai (16) du premier dispositif d'essai, lequel signal de sortie représente une mesure intégrale de la perméabilité de la vitre, et **en ce que** l'unité d'évaluation est conçue pour générer un message de défaut si le signal de sortie tombe en dessous d'une valeur seuil.

10. Capteur optique (1) selon la revendication 9, **caractérisé en ce que** le capteur est conçu pour générer une commande d'arrêt d'un système surveillé par le capteur optique avec le signal de défaut.

11. Capteur optique (1) selon la revendication 10, **caractérisé en ce que** le capteur est conçu pour supprimer la commande de mise hors service si le second dispositif d'essai ne détecte qu'une altération locale de la perméabilité de la vitre en dehors de la zone à travers laquelle les faisceaux lumineux (8) émis par l'émetteur (9) sont guidés.

12. Capteur optique selon l'une des revendications 10 ou 11, **caractérisé en ce que** le capteur est conçu pour générer une commande de désactivation lorsqu'un niveau élevé d'encrassement de la vitre est enregistré avec le premier dispositif d'essai ou qu'un encrassement lié à la sécurité est enregistré avec le second dispositif d'essai.

13. Capteur optique (1) selon l'une des revendications 1 à 12, **caractérisé en ce qu'**il possède un dispositif de nettoyage pour nettoyer la vitre, le dispositif de nettoyage pouvant être activé en fonction des signaux provenant du premier dispositif d'essai et/ou du second dispositif d'essai.

14. Capteur optique (1) selon la revendication 13, **caractérisé en ce que** l'unité d'évaluation est conçue pour générer une commande d'activation du dispositif de nettoyage si le signal de sortie du premier dispositif d'essai tombe en dessous de la valeur seuil ou d'une autre valeur seuil.

15. Capteur optique (1) selon l'une des revendications 13 ou 14, **caractérisé en ce que** la puissance du dispositif de nettoyage peut être régulée en fonction des signaux reçus des éléments récepteurs d'essai (34) du second dispositif d'essai.

16. Capteur optique (1) selon l'une des revendications 13 à 15, **caractérisé en ce que** le dispositif de nettoyage comporte un agencement d'émetteurs d'ultrasons (42) qui sont conçus pour guider les ondes ultrasoniques émises dans le disque.

17. Capteur optique (1) selon la revendication 16, **caractérisé en ce que** les émetteurs d'ultrasons (42) sont répartis dans la direction circonférentielle du disque et sont disposés de manière stationnaire sous le disque.

18. Capteur optique (1) selon l'une des revendications 13 à 17, **caractérisé en ce que** le dispositif de nettoyage est conçu comme un dispositif de chauffage.

19. Capteur optique (1) selon la revendication 18, **caractérisé en ce que** le dispositif de chauffage comporte un agencement de diodes électroluminescentes infrarouges (38) qui sont disposées sur le corps rotatif de telle sorte que les rayons infrarouges (41) qu'elles émettent sont dirigés sur l'intérieur du disque.

20. Capteur optique (1) selon la revendication 18, **caractérisé en ce que** le dispositif de chauffage comporte une pluralité de résistances chauffantes réparties dans la direction circonférentielle du disque, chacune d'entre elles étant disposée de manière fixe sous le disque.

21. Capteur optique (1) selon la revendication 18, **caractérisé en ce que** le dispositif de chauffage comporte un film transparent thermoconducteur qui est appliqué à l'intérieur de la vitre.

22. Capteur optique (1) selon la revendication 18, **caractérisé en ce que** le dispositif de chauffage a un film transparent qui est appliqué à l'intérieur de la vitre et dans lequel des pistes conductrices sont intégrées en tant qu'éléments chauffants.
